(19) Europäisches Patentamt
European Patent Office
Office européen des brevets

(11) Veröffentlichungsnummer: **0 148 446**
**B1**

(12) # EUROPÄISCHE PATENTSCHRIFT

(45) Veröffentlichungstag der Patentschrift: **12.10.88**

(51) Int. Cl.⁴: **C 08 F 8/50**

(21) Anmeldenummer: **84115279.6**

(22) Anmeldetag: **12.12.84**

(54) **Verfahren zum Abbau von Poly(diacetylenen).**

(30) Priorität: **23.12.83 DE 3346718**

(43) Veröffentlichungstag der Anmeldung: **17.07.85 Patentblatt 85/29**

(45) Bekanntmachung des Hinweises auf die Patenterteilung: **12.10.88 Patentblatt 88/41**

(84) Benannte Vertragsstaaten: **CH DE FR GB IT LI NL**

(56) Entgegenhaltungen:

(73) Patentinhaber: **BASF Aktiengesellschaft, Carl-Bosch- Strasse 38, D-6700 Ludwigshafen (DE)**

(72) Erfinder: **Leyrer, Reinhold J., Dr. Chem., Menzelstrasse 4, D-6700 Ludwigshafen (DE)**
Erfinder: **Wegner, Gerhard, Prof. Dr. Chem., Hinterhofstrasse 46, D-7809 Denzlingen (DE)**
Erfinder: **Mueller, Michael, Starkenburgring 28, D-6146 Alsbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 148 446 B1

LIBER, STOCKHOLM 1988

**Beschreibung**

Die Erfindung betrifft ein Verfahren zum Abbau von Poly(diacetylenen) in Lösung oder festem Zustand, insbesondere unter merklicher Verringerung des Molekulargewichts der Poly(diacetylene).

Poly(diacetylene) werden üblicherweise durch strahlungsinitiierte, topochemische Polymerisation von monomeren Diacetylenen, beispielsweise mittels γ-Strahlen, hergestellt. Das Molekulargewicht der so erhaltenen Poly(diacetylene) wird dabei im wesentlichen durch die Art des monomeren Diacetylens bestimmt und läßt sich nur begrenzt über die Polymerisationsbedingungen beeinflussen. Eine Erhöhung der Bestrahlungsintensität oder der Bestrahlungsdauer führen dabei nur innerhalb vorgegebener Grenzen zu einem höhermolekularen Polymeren, steigern jedoch im wesentlichen den Monomer-Umsatz, d. h. die Ausbeute an Poly(diacetylen). Da die Eigenschaften der Poly(diacetylene) außer von der Art der Diacetylen-Bausteine auch vom Molekulargewicht der Polymeren abhängen, ist es erstrebenswert, bei gleicher chemischer Struktur und gleichem chemischen Aufbau Poly(diacetylene) mit unterschiedlichen, frei wählbaren Molekulargewichten herzustellen.

Aus der Literatur ist es bereits bekannt, daß bei der Bestrahlung von Poly(diacetylen)-Lösungen mit UV-Licht eine Viskositätserniedrigung der Lösung eintritt, die auf eine Molekulargewichtsverringerung der Poly(diacetylene) durch Molekülabbau zurückzuführen ist (vgl. z.B. G. Wenz und G. Wegner, Makromol. Chem. Rapid Communication 3, 231 (1982)). Diese Methode ist jedoch für die gezielte Einstellung bestimmter Molekulargewichte der Poly(diacetylene) nur schlecht geeignet. Häufig sind sehr lange Bestrahlungszeiten notwendig. Zudem muß mit UV-Licht im Wellenlängenbereich von etwa 250 bis 320 nm gearbeitet werden, was besondere Schutz- und Vorsichtsmaßnahmen erforderlich macht.

Aufgabe der vorliegenden Erfindung war es, ein Verfahren aufzuzeigen, das es gestattet, einfach, schnell und reproduzierbar Poly(diacetylene) gleichen Aufbaus mit unterschiedlichen, gewünschten Molekulargewichten herzustellen.

Diese Aufgabe wird erfindungsgemäß dadurch gelöst, daß Poly(diacetylene) in Gegenwart von chemisch aktivierbaren, durch Wärme aktivierbaren und/oder durch aktinisches Licht aktivierbaren Sensibilisatoren abgebaut werden.

Gegenstand der Erfindung ist dementsprechend ein Verfahren zum Molekülabbau von Poly(diacetylenen), insbesondere unter merklicher Verringerung des Molekulargewichts der Poly(diacetylene), welches dadurch gekennzeichnet ist, daß die Poly(diacetylene) in Gegenwart von chemisch aktivierbaren, von durch Wärme aktivierbaren und/oder von durch aktinisches Licht aktivierbaren Sensibilisatoren oder Sensibilisator-Systemen unter entsprechender Aktivierung dieser Sensibilisatoren bzw. Sensibilisator-Systeme abgebaut werden.

Die Erfindung betrifft des weiteren spezielle Ausgestaltungsformen dieses Verfahrens gemäß der nachfolgenden detaillierten Beschreibung.

Das erfindungsgemäße Verfahren kann wegen seiner großen Variationsmöglichkeiten den jeweils gegebenen äußeren Bedingungen leicht angepaßt werden und ist dadurch sehr breit anwendbar. Es erlaubt das gezielte Einstellen beliebiger Molekulargewichte der Poly(diacetylene) in vergleichsweise kurzen Zeiten in einfacher und reproduzierbarer Weise. Es hat sich überraschenderweise gezeigt, daß der Abbau von Poly(diacetylenen) nicht nur durch Bestrahlung mit UV-Licht im Wellenlängenbereich der Eigenabsorption oder Poly(diacetylene) vorgenommen werden kann, sondern vorteilhafter und besser unter Verwendung von aktinischem Licht beliebiger Wellenlänge, ja sogar lediglich unter Erwärmen der Poly(diacetylene) bzw. durch eine rein chemische Initiierung bei Raumtemperatur. Die erfindungsgemäß einzusetzenden Sensibilisatoren bzw. Sensibilisator-Systeme bewirken dabei nach ihrer Aktivierung eine Induzierung bzw. Beschleunigung des Molekülabbaus der Poly(diacetylene).

In dem erfindungsgemäßen Verfahren können grundsätzlich alle üblichen und gebräuchlichen Poly(diacetylene) eingesetzt werden. Sie sind an sich bekannt und in der Literatur beschrieben. Die Verwendung von löslichen Poly(diacetylenen) hat sich unter anderem deswegen als vorteilhaft erwiesen, weil hierbei das Einmischen der Sensibilisatoren einfach und gut über eine Lösung der Substanzen vorgenommen werden kann. Kommen nicht-lösliche Poly(diacetylene) zur Anwendung, so werden die Sensibilisatoren vorteilhafterweise bereits bei der Herstellung der Poly(diacetylene), d. h. bei der Polymerisation, in die Polymeren eingebracht, was beispielsweise durch Cokristallisation der entsprechenden Sensibilisatoren mit den monomeren Diacetylenen möglich ist. Die in dem erfindungsgemäßen Verfahren einzusetzenden Poly(diacetylene) haben im allgemeinen ein mittleres Molekulargewicht (Gewichtsmittel, bestimmt durch Lichtstreuung) im Bereich von 10.000 bis 2.000.000, insbesondere im Bereich von 50.000 bis 1.000.000. Das Molekulargewicht der Poly(diacetylene) kann durch das erfindungsgemäße Verfahren dabei in beliebigen Grenzen gezielt erniedrigt und eingestellt werden.

Erfindungsgemäß kommen insbesondere solche Poly(diacetylene) zur Anwendung, die durch Polymerisation von monomeren Diacetylenen der allgemeinen Formel (I)

$$R^1\text{-}C\equiv C\text{-}C\equiv C\text{-}R^2 \qquad (I)$$

hergestellt worden sind, und dementsprechend wiederkehrende Struktureinheiten der allgemeinen Formel (II)

$$[=C(R^1)\text{-}C\equiv C\text{-}C(R^2)=] \qquad (II)$$

enthalten.

In den Formeln (I) und (II) können $R^1$ und $R^2$ gleich oder verschieden sein und stehen unabhängig voneinander für einen organischen, insbesondere aliphatischen, aromatischen oder gemischt aliphatischaromatischen Rest im allgemeinen mit 1 bis 50 C-Atomen, wobei diese Reste gesättigt oder ungesättigt sowie gegebenenfalls substituiert sein können und/oder insbesondere auch Heteroatome enthalten und/oder durch Heteroatome oder Heteroatome enthaltende Gruppierungen unterbrochen sein können. Als Heteroatome sind hier vorzugsweise Sauerstoff, Stickstoff und/oder Schwefel zu nennen. Vorzugsweise enthalten die Reste $R^1$ und $R^2$ 10 oder mehr C-Atome. Insbesondere bevorzugt sind solche Reste $R^1$ und $R^2$, die Säureester-, Säureamid-, Sulfonat-, Urethan- und/oder Harnstoff-Gruppierungen enthalten. Bei den gebräuchlichen Diacetylenen sind die Reste $R^1$ und $R^2$ im allgemeinen gleich.

Als typische Vertreter für die Reste $R^1$ und $R^2$ in den allgemeinen Formeln (I) und (II) seien im Falle der löslichen Poly(diacetylene) genannt:

(a) $-(CH_2)_3-O-\underset{\underset{O}{\|}}{C}-NH-CH_2-CO_2-n-C_4H_9$

(b) $-(CH_2)_4-O-\underset{\underset{O}{\|}}{C}-NH-CH_2-CO_2-n-C_4H_9$

(c) 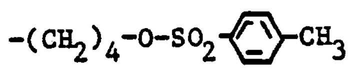

(d) 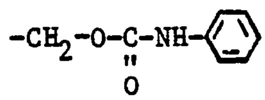

(e) 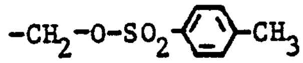

(f) $-(CH_2)_9-O-\underset{\underset{O}{\|}}{C}-CH(CH_3)_2$

(g) 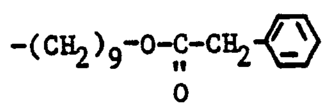

(h) 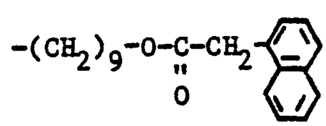

(i) $-(CH_2)_{11}-CH_3$

(k) 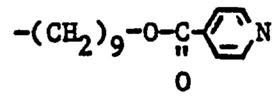

(l) 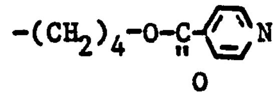 .

Entsprechende Poly(diacetylene) sowie ihre Herstellung sind beispielsweise in J. Pol. Sci. Polymer Letters Ed. 16, 607 (1978); J. Chem. Phys. 70, 4387 (1979); J. Pol. Sci. Polymer Letters Ed. 17, 203 (1979); Makromol. Chem. Rapid Comm., 3, 231, 249 und 815 (1982) beschrieben. Als Lösungsmittel für die löslichen Poly(diacetylene) sind unter anderem Methylenchlorid, Chloroform, Dimethylformamid, Nitrobenzol, Dekalin und ähnliche geeignet. Als besonders vorteilhaft hat es sich erwiesen, erfindungsgemäß solche Poly(diacetylene) einzusetzen, aus denen die nach der Polymerisation im allgemeinen noch in den Polymeren enthaltenen, nicht polymerisierten monomeren Diacetylene, beispielsweise durch Umfällen der Polymeren oder Extraktion mit geeigneten Lösungsmitteln, z. B. Aceton, entfernt worden sind.

Bei den erfindungsgemäß einzusetzenden Poly(diacetylenen) kann es sich sowohl um Homopolymerisate von monomeren Diacetylenen handeln als auch um Copolymerisate von 2 oder mehreren, verschiedenen monomeren Diacetylenen oder auch um Copolymerisate von einem oder mehreren monomeren Diacetylenen mit einer untergeordneten Menge an anderen üblichen Comonomeren. Bevorzugt sind solche Poly(diacetylene), die ausschließlich aus Diacetylen-Einheiten bestehen. In dem erfindungsgemäßen Verfahren zum Abbau der Poly(diacetylene) können die Poly(diacetylene) einzeln oder auch in Mischung miteinander eingesetzt werden.

Als Sensibilisatoren, die in dem erfindungsgemäßen Verfahren zusammen mit den Poly(diacetylenen) zur Anwendung gelangen, kommen solche Verbindungen oder Systeme in Betracht, die durch aktinisches Licht, durch Wärme oder chemisch aktivierbar sind und nach ihrer Aktivierung den Molekülabbau der Poly(diacetylene) induzieren bzw. beschleunigen.

Zu den lichtaktivierbaren Sensibilisatoren gehören solche Verbindungen, die unter dem Einfluß von aktinischem Licht, insbesondere im Wellenlängenbereich von etwa 180 bis 800 nm, unmittelbar freie, reaktive Radikale bilden. Diese Radikale reagieren dann mit den Poly(diacetylenen) unter Molekülabbau. Als Beispiel für solche Verbindungen sei Azobisisobutyronitril genannt. Als lichtaktivierbare Sensibilisatoren eignen sich aber auch Verbindungen mit einer oder mehreren Absorptionsbanden im Wellenlängenbereich des aktinischen Lichts, insbesondere im Bereich von etwa 180 bis 800 nm, die bei Bestrahlung mit dem aktinischen Licht in einen angeregten, energiereicheren Zustand, wie z.B. sehr häufig den Triplet-Zustand, übergehen und die aus diesem angeregten Zustand heraus den Abbau der Poly(diacetylene), sei es durch Energieübertragung und/oder insbesondere auch über radikalische Reaktionen, induzieren bzw. beschleunigen. Zu den lichtaktivierbaren Sensibilisatoren dieser Kategorie gehören beispielsweise Xanthen-Farbstoffe, von denen sich u. a. Rhodamin 6 G als besonders vorteilhaft erwiesen hat; Thiazinium-Farbstoffe, wie etwa Methylenblau; aber auch mehrkernige Chinone und deren Derivate, wie insbesondere Anthrachinon oder Anthrachinon-Derivate; sowie Arylketone, wobei hier Benzophenon, Michler's Keton oder Mischungen aus Benzophenon und Michler's Keton besonders erwähnt seien.

Bei den wärmeaktivierbaren Sensibilisatoren, die durch direkte oder indirekte Wärmezufuhr oder auch durch Wärmestrahlung, beispielsweise IR-Strahlung einer Wellenlänge größer 0,8 µm, aktiviert werden können, handelt es sich im allgemeinen um Verbindungen, die in der Wärme freie, reaktive Radikale bilden und dann über eine radikalische Reaktion mit den Poly(diacetylenen) deren Molekülabbau bewirken. Bei den wärmeaktivierbaren Sensibilisatoren handelt es sich somit in aller Regel um radikalische oder unter dem Einfluß von Wärme in freie Radikale zerfallende Verbindungen, die in der Wärme mit den Poly(diacetylenen) reagieren. Als wärmeaktivierbare Sensibilisatoren sind solche Verbindungen bevorzugt, die unter dem Einfluß von Wärme, insbesondere bei Temperaturen im Bereich von etwa 40 bis 200°C, freie, reaktive Radikale bilden. Hierzu gehören insbesondere solche Verbindungen, wie sie als radikalische Katalysatoren für die Polymerisation von ethylenisch ungesättigten Verbindungen bekannt und üblich sind. Beispielhaft und stellvertretend hierfür seien Azobisisobutyronitril und Benzoylperoxid genannt.

Als chemisch aktivierbare Sensibilisatoren bzw. Sensibilisator-Systeme sind insbesondere die Verbindungen zu nennen, die in Gegenwart von anderen Verbindungen, insbesondere Reduktionsmitteln, freie reaktive Radikale bilden. Hierzu gehören vor allem die als Polymerisationskatalysatoren bekannten und üblichen Redox-Systeme, die unter Bildung freier Radikale reagieren. Beispiele hierfür sind Wasserstoffperoxid/$Fe^{2+}$; Benzoylperoxid/ $Fe^{2+}$, Peroxid/Amin oder C-H-labile organische Verbindung/Uranylacetat.

Zu den erfindungsgemäß einzusetzenden, aktivierbaren Sensibilisatoren für den Abbau der Poly(diacetylene) gehört auch Sauerstoff. Seine Aktivierung erfolgt im System Poly(diacetylen)/$O_2$ durch Bestrahlung mit

aktinischem Licht, insbesondere im Wellenlängenbereich von etwa 250 bis 320 nm. Es wird angenommen, ohne durch diese Theorie gebunden sein zu wollen, daß durch die aktinische Strahlung zunächst das Poly(diacetylen) in einen angeregten Zustand versetzt wird, aus welchem heraus es dann mit dem Sauerstoff, letztlich unter Insertion und Bildung von Peroxid-Bindungen, in Wechselwirkung tritt, und diese Peroxid-Bindungen über radikalische Reaktionen den Abbau der Poly(diacetylene) bewirken und beschleunigen.

Die Sensibilisatoren können allein oder auch in Mischung miteinander eingesetzt werden. In einer Ausführungsform der Erfindung können beispielsweise solche lichtaktivierbaren Sensibilisatoren zum Einsatz gelangen, deren Absorptionsmaxima im Bereich der Eigenabsorption der Poly(diacetylene) liegen. In diesem Fall wird durch die Mitverwendung der Sensibilisatoren der Abbau der Poly(diacetylene) nicht nur beschleunigt, sondern es lassen sich auch in einigen Fällen höhere Abbaugrade erzielen. In einer anderen Ausführungsform können lichtaktivierbare Sensibilisatoren eingesetzt werden, deren Absorptionsmaxima außerhalb der Eigenabsorption der Poly(diacetylene) liegen, wodurch es möglich wird, einfach handhabbare Strahlungsquellen zu verwenden, wie beispielsweise Strahlungsquellen für sichtbares Licht. Es können auch Mischungen aus lichtaktivierbaren Sensibilisatoren eingesetzt werden, deren Absorptionsmaxima in unterschiedlichen Wellenlängenbereichen liegen. Hierdurch ist es möglich, das von den Strahlungsquellen emittierte aktinische Licht besser und vollständiger auszunutzen und für den Abbau der Poly(diacetylene) wirksam zu machen. Bei Verwendung von wärmeaktivierbaren Sensibilisatoren kann auf den Einsatz von aktinischem Licht völlig verzichtet werden, und es genügt zum Abbau der Poly(diacetylene) ein einfaches, direktes oder indirektes Erwärmen der Poly(diacetylen)/Sensibilisator-Mischung. Selbstverständlich kann auch eine Kombination aus lichtaktivierbaren und wärmeaktivierbaren Sensibilisatoren zur Anwendung gelangen. Die Sensibilisatoren bzw. Sensibilisator-Systeme werden im allgemeinen in Mengen von 0,001 bis 10 Gew.-%, vorzugsweise in Mengen von 0,05 bis 5 Gew.-%, bezogen auf das Poly(diacetylen), eingesetzt.

Für das erfindungsgemäße Verfahren können die Poly(diacetylene) in inniger Mischung bzw. innigem Kontakt mit den Sensibilisatoren in jeder beliebigen Form eingesetzt werden. Als sehr günstig hat es sich erwiesen, eine Lösung der Poly(diacetylene) und der Sensibilisatoren bzw. der Sensibilisator-Systeme der Aktivierungsbehandlung für die Sensibilisatoren und damit zur Bewirkung des Abbaus der Poly(diacetylene) zu unterwerfen. Als Lösungsmittel kommen dabei die weiter oben genannten Lösungsmittel für Poly(diacetylene) in Betracht. Die Konzentration der Poly(diacetylene) in diesen Lösungen kann in weiten Grenzen schwanken und liegt im allgemeinen im Bereich von 0,01 bis 50 Gew.-%, bezogen auf die Gesamtlösung. Die Lösungen werden dabei während der Aktivierungsbehandlung und der Abbaureaktion vorteilhafterweise durchmischt gehalten. Die Lösungen können, insbesondere in hochkonzentrierter Form, auch in Form dünner, flüssiger Schichten eingesetzt werden.

Die Gemische der Poly(diacetylene) und Sensibilisatoren können auch in fester Form der Behandlung zum Abbau der Poly(diacetylene) unterworfen werden. Vorteilhafterweise werden hierzu dünne, feste Schichten der Poly(diacetylene), die die Sensibilisatoren in homogener Verteilung enthalten, eingesetzt. Diese festen Schichten können entweder direkt durch Polymerisation der monomeren Diacetylene in dünner Schicht erhalten, oder durch übliche Techniken, beispielsweise Gießen aus Lösung, Abdampfen des Lösungsmittels und Trocknen, hergestellt werden. Die Dicke der Schichten ist in weiten Grenzen variabel, wobei sich Schichtdicken im Bereich von 10 nm bis etwa 100 µm in der Praxis gut bewährt haben. Es können auch mehrlagige Poly(diacetylen)-Schichten zum Einsatz gelangen.

Den Poly(diacetylenen) können, insbesondere wenn sie in Form fester Schichten eingesetzt werden, neben den Sensibilisatoren auch noch weitere Zusatzstoffe zugemischt sein, wie z. B. Weichmacher, Pigmente, Füllstoffe, Antioxidantien etc. Diese Zusatzstoffe, die im allgemeinen in Mengen nicht über 40 Gew.-%, insbesondere in Mengen bis zu 30 Gew.-%, bezogen auf das Poly(diacetylen), mitverwendet werden, dienen insbesondere der Modifizierung oder Verbesserung der Schichteigenschaften für eine spätere Anwendung dieser Schichten.

Zum Abbau der Poly(diacetylene) wird den Gemischen aus Poly(diacetylenen) und Sensibilisatoren - in Abhängigkeit von der Art des oder der eingesetzten Sensibilisatoren - Energie in Form von Wärme- und/oder Strahlungsenergie oder, bei chemisch aktivierbaren Sensibilisatoren, gegebenenfalls auch eine Komponente des Redox-Systems zugeführt.

Bei Einsatz von wärmeaktivierbaren Sensibilisatoren wird die Wärme nach an sich beliebigen Methoden gleichmäßig den zu behandelnden Gemischen zugeführt. Bei Einsatz von Poly(diacetylen)-Lösungen kann dabei die Erwärmung direkt oder indirekt nach allen bekannten oder üblichen Methoden erfolgen. Liegen die Poly(diacetylene) in Form fester Schichten vor, kann die für die Induzierung des Abbaus notwendige Wärme beispielsweise durch Beaufschlagen der Schicht mit Warmluft oder vorteilhafterweise durch Bestrahlen mit Wärmestrahlung, z. B. IR-Strahlung einer Wellenlänge größer etwa 0,8 µm, erfolgen. Für den wärmesensibilisierten Abbau der Poly(diacetylene) werden dabei die Lösungen bzw. Schichten aus den Poly(diacetylenen) im allgemeinen auf Temperaturen im Bereich von 40 bis etwa 200°C, vorzugsweise im Bereich von etwa 45 bis etwa 150°C, erwärmt.

Werden zur Induzierung bzw. Beschleunigung des Abbaus der Poly(diacetylene) lichtaktivierbare Sensibilisatoren eingesetzt, so wird das Poly(diacetylen)/Sensibilisator-Gemisch zur Durchführung des erfindungsgemäßen Verfahrens mit aktinischem Licht, insbesondere einer Wellenlänge im Bereich von etwa 180 nm bis etwa 800 nm bestrahlt. Die Wellenlänge des aktinischen Lichts wird dabei vorzugsweise auf die Absorptionsmaxima der Sensibilisatoren eingestellt. Als Strahlungsquellen kommen die für aktinisches Licht im UV- und sichtbaren Wellenlängenbereich üblichen Strahlungsquellen in Betracht, wie beispielsweise

Glühlampen, Halogenbrenner, Quecksilbernieder-, -mittel- oder hochdrucklampen, die gegebenenfalls, z. B. mit Eisen oder Gallium, dotiert sein können, Xenonlampen, Leuchtstoffröhren, superaktinische Leuchtstoffröhren, Excimerlaser, UV-Laser etc. Als besonders vorteilhaft hat sich hier die Bestrahlung mit aktinischem Licht im Wellenlängenbereich von etwa 350 bis 800 nm erwiesen unter Verwendung von in diesem Wellenlängenbereich absorbierenden Sensibilisatoren.

Die Dauer der Erwärmung und/oder Bestrahlung der Poly(diacetylen)/Sensibilisator-Gemische hängt neben der Art des eingesetzten Sensibilisators, der verwendeten Energiequelle und anderen Verfahrensparametern, wie z. B. Schichtdicke, Lösungskonzentration etc., insbesondere von dem gewünschten Grad der Molekulargewichtserniedrigung ab. Üblicherweise läßt sich erfindungsgemäß bereits in nur wenigen Minuten ein starker Abbau der Poly(diacetylene) erreichen. Die gewünschten Molekulargewichte lassen sich dabei gut und reproduzierbar einstellen.

Die chemisch aktivierbaren Systeme, wie insbesondere die Redox-Systeme, und Sauerstoff eignen sich als Sensibilisatoren insbesondere bei der Durchführung des erfindungsgemäßen Verfahrens in Lösung. Im Falle des Sauerstoffs wird dieser am zweckmäßigsten, unter Sättigung der Lösung mit $O_2$ durch die Lösung der Poly(diacetylene) hindurch geleitet und die Lösung mit aktinischem Licht, insbesondere im Wellenlängenbereich von etwa 250 bis 320 nm, so lange bestrahlt, bis die gewünschte Molekulargewichtsabnahme erreicht ist. Bei den Redox-Systemen kann man so verfahren, daß man in der Lösung das Poly(diacetylen) und gegebenenfalls eine Komponente des Redox-Systems vorlegt und dann die andere Komponente, vorzugsweise das Reduktionsmittel, oder beide Komponenten des Redox-Systems in diese Lösung unter gleichzeitiger intensiver Vermischung einbringt. Erreicht das Redox-System seine Aktivität erst bei erhöhten Temperaturen oder bei Bestrahlung mit aktinischem Licht, ist es gleichwohl möglich, dem Poly(diacetylen) beide Komponenten des Redox-Systems zuzugeben und den Abbau durch entsprechende Wärme- oder Lichtzufuhr einzuleiten. Bei Einsatz von Redox-Systemen als Sensibilisatoren kann das Ausmaß der Molekulargewichtserniedrigung über die Sensibilisator-Menge geregelt werden.

Nach dem Abbau können die Poly(diacetylene) direkt und unmittelbar für den gewünschten Anwendungszweck eingesetzt werden. Werden in dem erfindungsgemäßen Verfahren Poly(diacetylen)-Lösungen eingesetzt, so können die Poly(diacetylene) vor ihrer weiteren Verwendung aus dieser Lösung zunächst isoliert werden, beispielsweise durch Abdampfen des Lösungsmittels oder durch Ausfällen mit einem Nichtlösungsmittel, oder sie können auch direkt aus der Lösung weiterverarbeitet werden. Feste Schichten aus den Poly(diacetylenen) sind nach dem Abbau der Poly(diacetylene) im allgemeinen unmittelbar gebrauchsfertig. Jedoch können auch sie gewünschtenfalls vor der weiteren Verarbeitung extrahiert, gelöst oder in anderer Art und Weise umgearbeitet werden.

Mit dem erfindungsgemäßen Verfahren können die Molekulargewichte von Poly(diacetylenen) einfach und leicht variiert und erniedrigt und in dem jeweils gewünschten Bereich gezielt und reproduzierbar eingestellt werden. Damit ist es auch möglich, die Eigenschaften der Poly(diacetylene) zu verändern und den gewünschten Erfordernissen anzupassen. Insbesonders geeignet sind die nach dem erfindungsgemäßen Verfahren erhaltenen abgebauten Poly(diacetylene) für die Herstellung von positiv arbeitenden, photoabbaubaren Resistschichten und Trockenfilmresisten. Durch die Einstellung eines gezielten Molekulargewichts lassen sich dabei insbesondere strahlungsempfindliche Resistschichten auf Basis von Poly(diacetylenen) mit definierten mechanischen, beispielsweise elastischen, Eigenschaften und variabler Empfindlichkeit herstellen.

Die Erfindung wird durch die nachfolgenden Beispiele näher erläutert. Die in den Beispielen genannten Teile und Prozente beziehen sich, sofern nicht anders angegeben, auf das Gewicht. Als Maß für das Molekulargewicht wurde die relative oder reduzierte Viskosität der Poly(diacetylene) gemessen.

**Beispiel 1**

4,6-Decadiin-1,10-diol-bis-(n-butoxycarbonylmethylurethan) wurde durch Bestrahlen mit $^{60}$Co-γ-Strahlung (3 Megarad) polymerisiert. Das mit 30 %-iger Ausbeute erhaltene kristalline Poly(diacetylen) entsprach der allgemeinen Formel (II) mit $R^1 = R^2$ und dem in der Beschreibung unter (a) angegebenen Rest für die Substituenten $R^1$ und $R^2$. Aus dem erhaltenen Polymeren (P3BCMU) wurde das nicht-umgesetzte Monomere durch Extraktion mit Aceton entfernt. Man erhielt metallisch glänzende Fasern, die in Chloroform in einer Konzentration von 1,1 g P3BCMU/l Chloroform gelöst wurden. Durch diese Lösung wurde fein verteilt Sauerstoff durchgeleitet. Die sauerstoffgesättigte Lösung wurde 2,5 Minuten mit einer HBO-200 W-Quecksilberhöchstdrucklampe bestrahlt. Dabei verringerte sich die relative Viskosität von ursprünglich 1,90 auf 1,74.

**Beispiel 2**

Es wurde wie in Beispiel 1 verfahren, jedoch mit dem Unterschied, daß durch die Lösung des P3BCMU in Chloroform kein Sauerstoff durchgeleitet wurde, sondern diesmal Azobisisobutyronitril in einer Konzentration

von 1,8 · $10^{-3}$ Mol/l Chloroform zugegeben wurde. Die Lösung wurde wie in Beispiel 1 2,5 Minuten mit der Quecksilberhöchstdrucklampe bestrahlt. Dadurch verringerte sich die relative Viskosität von 1,90 auf 1,53.

**Vergleichsversuch A**

Es wurde wie in Beispiel 1 gearbeitet, die Lösung des P3BCMU in Chloroform diesmal jedoch direkt, d. h. ohne Durchleiten von Sauerstoff oder Zusatz eines sonstigen Sensibilisators, 2,5 Minuten mit der Quecksilberhöchstdrucklampe von Beispiel 1 bestrahlt. Hierbei verringerte sich die relative Viskosität lediglich von 1,90 auf 1,83.

**Beispiel 3**

Es wurde wie in Beispiel 1 verfahren, jedoch mit dem Unterschied, daß diesmal zu der Chloroform-Lösung des P3BCMU Benzophenon in einer Konzentration von 1,4 · $10^{-3}$ Mol/l Chloroform hinzugegeben wurde. Ein Durchleiten von Sauerstoff fand nicht statt. Nach der Bestrahlung (2,5 Minuten mit der Quecksilberhöchstdrucklampe von Beispiel 1) hatte sich die relative Viskosität von 1,90 auf 1,30 verringert.

**Beispiel 4**

Es wurde wie in Beispiel 3 gearbeitet, jedoch mit dem Unterschied, daß anstelle von Benzophenon zu der Lösung des P3BCMU diesmal Anthrachinon in einer Konzentration von 1,1 · $10^{-3}$ Mol/l Chloroform hinzugegeben wurde. Nach der Bestrahlung wurde eine relative Viskosität von 1,10 gemessen.

**Beispiel 5**

Es wurden 1,3 g des Poly(diacetylens) von Beispiel 1 (P3BCMU) in einem Liter Chloroform gelöst und zu dieser Lösung 1,6 · $10^{-2}$ Mol Azobisisobutyronitril hinzugegeben. Die Lösung wurde 20 Minuten lang auf 45°C erwärmt. Dabei verringerte sich die reduzierte Viskosität ($\eta_{sp}/c$) von 1,09 auf 0,58 l/g.

**Beispiel 6**

Es wurde wie in Beispiel 5 gearbeitet, diesmal jedoch die Poly(diacetylen)/Azobisisobutyronitril-Lösung 20 Minuten auf 55°C erwärmt. Die reduzierte Viskosität verringerte sich dabei von 1,09 auf 0,33 l/g.

**Vergleichsversuch B**

Es wurde wie in den Beispielen 5 und 6 gearbeitet, diesmal jedoch auf den Zusatz von Azobisisobutyronitril zu der Poly(diacetylen)-Lösung verzichet. Weder nach der 20-minütigen Erwärmung auf 45°C noch nach der auf 55°C hatte sich die reduzierte Viskosität verändert, sondern betrug nach wie vor 1,09 l/g.

**Beispiel 7**

Diesmal wurden 0,96 g P3BCMU in einem Liter Chloroform gelöst und zu dieser Lösung 2,0 · $10^{-5}$ Mol Rhodamin 6G hinzugegeben. Die Lösung wurde 5 Minuten mit aktinischem Licht einer Wellenlänge von 546 nm bestrahlt, wobei sich die relative Viskosität von 2,15 auf 1,26 verringerte.

**Beispiel 8**

Es wurde wie in Beispiel 7 gearbeitet, jedoch mit dem Unterschied, daß diesmal anstelle von Rhodamin 6G der Farbstoff Methylenblau in einer Konzentration von 3,1 · $10^{-5}$ Mol zu der Poly(diacetylen)-Lösung zugesetzt wurde. Diese Lösung wurde 5 Minuten mit aktinischem Licht einer Wellenlänge von 579 nm bestrahlt. Die relative Viskosität verringerte sich von 2,15 auf 1,17.

**Vergleichsversuche C und D**

Beispiel 7 bzw. 8 wurde wiederholt, diesmal jedoch auf den Zusatz von Rhodamin 6G bzw. Methylenblau verzichtet. Die Bestrahlung der Poly(diacetylen)-Lösung wurde mit aktinischem Licht einer Wellenlänge von 546 nm bzw. 579 nm, jeweils für 5 Minuten, vorgenommen. In beiden Fällen veränderte sich die relative Viskosität nicht, sondern betrug sowohl vor als auch nach der Bestrahlung 2,15.

**Beispiel 9**

Es wurde eine azobisisobutyronitrilhaltige Poly(diacetylen)-Lösung in Chloroform entsprechend Beispiel 5 hergestellt. Diese Lösung wurde in 4 Teile geteilt. Der erste Teil wurde 10 Minuten, der zweite Teil 20 Minuten, der dritte Teil 30 Minuten und der vierte Teil 40 Minuten auf 45°C erwärmt. Die ursprüngliche reduzierte Viskosität der Lösung von 1,09 l/g hatte sich im ersten Fall auf 0,72 l/g, im zweiten Fall auf 0,58 l/g, im dritten Fall auf 0,48 l/g und im vierten Fall auf 0,42 l/g verringert. Aus jeder der vier Lösungen wurde mittels spin-coating ein Film auf ein aluminiumbedampftes Glassubstrat aufgebracht, wobei der Film nach Abdampfen des Lösungsmittels und Trocknen eine Trockenschichtdicke von jeweils etwa 10 nm besaß. Man erhielt auf diese Weise strahlungsempfindliche Resistschichten mit differenzierten Eigenschaften.

**Beispiel 10**

Es wurde wie in Beispiel 1 beschrieben verfahren, jedoch mit dem Unterschied, daß diesmal anstelle des Durchleitens von Sauerstoff zu der Poly(diacetylen)lösung 1,1 · $10^{-3}$ Mol/l Anthrachinon und 2 · $10^{-5}$ Mol/l Rhodamin 6G zugegeben wurden. Aus dieser Lösung wurde durch spin-coating ein 10 nm dicker Resistfilm auf einem aluminiumbedampften Glassubstrat hergestellt. Die Resistschicht wurde durch eine Photomaske zunächst bildmäßig mit aktinischem Licht einer Wellenlänge von 546 nm belichtet und dann durch Auswaschen mit Aceton entwickelt. Die dabei bildmäßig freigelegten Bereiche des aluminiumbedampften Glassubstrats wurden geätzt, so daß das Glas freigelegt wurde. Die noch nicht belichteten Bereiche der Resistschicht wurden in einem zweiten bildmäßigen Belichtungsschritt durch eine UV-Maske mit ultraviolettem Licht bestrahlt und anschließend ebenfalls durch Auswaschen mit Aceton entwickelt. Nach dieser zweiten bildmäßigen Strukturierung konnte die Aluminiumoberfläche unabhängig vom ersten Schritt erneut behandelt werden.

**Patentansprüche**

1. Verfahren zum Abbau von Poly(diacetylenen), dadurch gekennzeichnet, daß die Poly(diacetylene) in Gegenwart von chemisch aktivierbaren, von durch Wärme aktivierbaren und/oder von durch aktinisches Licht aktivierbaren Sensibilisatoren oder Sensibilisatorsystemen durch entsprechende Aktivierung dieser Sensibilisatoren bzw. Sensibilisator-Systeme abgebaut werden.

2. Verfahren nach Anspruch 1, dadurch gekennzeichnet, daß Lösungen der Poly(diacetylene) und Sensibilisatoren bzw. Sensibilisator-Systeme eingesetzt werden.

3. Verfahren nach einem der Ansprüche 1 oder 2, dadurch gekennzeichnet, daß dünne, feste oder flüssige Schichten auf Basis der Poly(diacetylene) eingesetzt werden, die die Sensibilisatoren bzw. Sensibilisatorsysteme in homogener Verteilung enthalten.

4. Verfahren nach einem der Ansprüche 1 bis 3, dadurch gekennzeichnet, daß als wärmeaktivierbare Sensibilisatoren Verbindungen eingesetzt werden, die unter dem Einfluß von Wärme freie, reaktive Radikale bilden und die Poly(diacetylene) in homogener Mischung mit diesen Sensibilisatoren auf Temperaturen im Bereich von 40 bis 200°C, mindestens aber auf die Aktivierungstemperatur des jeweiligen Sensibilisators, erwärmt werden.

5. Verfahren nach einem der Ansprüche 1 bis 3, dadurch gekennzeichnet, daß durch Bestrahlung mit aktinischem Licht, insbesondere im Wellenlängenbereich von etwa 180 bis 800 nm, aktivierbare

Sensibilisatoren eingesetzt werden und die in homogener Mischung mit diesen Sensibilisatoren vorliegenden Poly(diacetylene) mit dem aktinischen Licht bestrahlt werden.

6. Verfahren nach Anspruch 5, dadurch gekennzeichnet, daß als lichtaktivierbare Sensibilisatoren solche Verbindungen eingesetzt werden, die unter dem Einfluß des aktinischen Lichtes unmittelbar freie, reaktive Radikale bilden.

7. Verfahren nach Anspruch 5, dadurch gekennzeichnet, daß als lichtaktivierbare Sensibilisatoren Verbindungen eingesetzt werden, die bei Bestrahlung mit aktinischem Licht in einen angeregten, energiereicheren Zustand übergehen, aus dem heraus sie über radikalische Reaktionen mit den Poly(diacetylenen) reagieren.

8. Verfahren nach einem der Ansprüche 1 bis 3, dadurch gekennzeichnet, daß als Sensibilisatoren Redox-Systeme eingesetzt werden, die unter Bildung freier Radikale reagieren.

9. Verfahren nach Anspruch 2, dadurch gekennzeichnet, daß als Sensibilisator Sauerstoff verwendet wird.

10. Verfahren nach einem der Ansprüche 1 bis 8, dadurch gekennzeichnet, daß die Sensibilisatoren in Mengen von 0,001 bis 10 Gew.-%, bezogen auf das Poly(diacetylen), eingesetzt werden.

**Claims**

1. A process for the degradation of a poly(diacetylene), wherein the poly(diacetylene) is degraded in the presence of sensitizers or sensitizer systems which can be activated chemically, by heat and/or by actinic light by appropriate activation of these sensitizers or sensitizer systems.

2. A process as claimed in claim 1, wherein a solution of the poly(diacetylene) and sensitizers or sensitizer systems is employed.

3. A process as claimed in either of claims 1 or 2 wherein a thin solid or liquid layer based on the poly(diacetylene) and containing homogeneously dispersed sensitizers or sensitizer systems is employed.

4. A process as claimed in any of claims 1 to 3 wherein the heat-activable sensitizer used is a compound which forms reactive free radicals under the action of heat, and the poly(diacetylene) in a homogenous mixture with this sensitizer is heated to 40 - 200°C, but to no lower than the activation temperature of the particular sensitizer.

5. A process as claimed in any of claims 1 to 3 wherein a sensitizer which can be activated by exposure to actinic light having a wavelength of in particular about 180 - 800 nm is employed, and the poly(diacetylene), which is homogeneously mixed with this sensitizer, is exposed to actinic light.

6. A process as claimed in claim 5, wherein the photoactivable sensitizer used is a compound which directly forms reactive free radicals under the action of actinic light.

7 .A process as claimed in claim 5, wherein the photoactivable sensitizer used is a compound which undergoes a transition to an excited high-energy state when exposed to actinic light and which, on undergoing a transition out of this state, reacts with the poly(diacetylene) via free radical reactions.

8. A process as claimed in any of claims 1 to 3 wherein the sensitizer used is a redox system which reacts with formation of free radicals.

9. A process as claimed in claim 2, wherein the sensitizer used is oxygen.

10. A process as claimed in any of claims 1 to 8 wherein the sensitizer is used in an amount of from 0.001 to 10 % by weight, based on the poly(diacetylene).

**Revendications**

1. Procédé de dégradation de poly(diacétylènes) caractérisé par le fait que les poly(diacétylènes) sont dégradés, en présence de sensibilisateurs ou systèmes de sensibilisateurs, activables chimiquement, activables à la chaleur et/ou activables à la lumière actinique, par activation correspondante de ces sensibilisateurs ou systèmes de sensibilisateurs.

2. Procédé selon la revendication 1, caractérisé par le fait que sont utilisées des solutions des poly(diacétylènes) et sensiblilisateurs ou systèmes de sensibilisateurs.

3. Procédé selon l'une des revendications 1 ou 2, caractérisé par le fait que sont utilisées des couches minces, solides ou liquides, à base de poly(diacétylènes), qui contiennent les sensibilisateurs ou systèmes de sensibilisateurs en répartition homogène.

4. Procédé selon l'une des revendications 1 à 3, caractérisé par le fait que sont utilisés, comme sensibilisateurs activables à la chaleur, des composés qui, sous l'influence de la chaleur, forment des radicaux réactifs libres et les poly(diacétylènes) sont chauffées, en mélange homogène avec ces sensibilisateurs, à des températures comprises entre 40 et 200°C, mais au moins à la température d'activation du sensibilisateur correspondant.

5. Procédé selon l'une des revendications 1 à 3, caractérisé par le fait que l'on utilise des sensibilisateurs activables par irradiation à la lumière actinique, en particulier dans le domaine des longueurs d'onde d'environ 180 à 800 nm et on irradie à la lumière actinique les poly(diacétylènes) se trouvant en mélange homogène avec

ces sensibilisateurs.

6. Procédé selon la revendication 5, caractérisé par le fait que l'on utilise, comme sensibilisateurs activables à la lumière, des composés qui forment des radicaux réactifs, immédiatement libres, sous l'influence de la lumière actinique.

7. Procédé selon la revendication 5, caractérisé par le fait que l'on utilise, comme sensibilisateurs activables à la lumière, des composés qui, par irradiation à la lumière actinique, passent à un état excité, riche en énergie, à partir duquel ils réagissent avec les poly(diacétylènes) par l'intermédiaire de réactions engendrant des radicaux.

8. Procédé selon l'une des revendications 1 à 3, caractérisé par le fait que l'on utilise, comme sensibilisateurs, des systèmes redox qui réagissent en formant des radicaux libres.

9. Procédé selon la revendication 2, caractérisé par le fait que l'on utilise, comme sensibilisateur, de l'oxygène.

10. Procédé selon l'une des revendications 1 à 8, caractérisé par le fait que l'on utilise les sensibilisateurs en proportion de 0,001 à 10 % en poids rapportées au poly(diacétylène)